# EUROPÄISCHE PATENTSCHRIFT

(11) **EP 0 577 855 B1**
(45) Veröffentlichungstag und Bekanntmachung des Hinweises auf die Patenterteilung: **04.10.1995**
(21) Anmeldenummer: 92109007.2
(22) Anmeldetag: 29.05.1992
(51) Int. Cl.: G01M 17/00, G01M 17/06

(54) **Verfahren und Vorrichtung zur Lenkung abrollender Räder eines Fahrzeugs auf Prüfständen**
Procedure and device for driving the rotating wheels of a vehicle on a test bench
Procédé et dispositif pour gouverner les roues tournantes d'un véhicule sur un banc d'essais

(43) Veröffentlichungstag der Anmeldung: 12.01.1994
(73) Patentinhaber: CARL SCHENCK AG, D-64273 Darmstadt (DE)
(72) Erfinder: Dadt, Hans Joachim, W-6148 Heppenheim (DE)
(74) Vertreter: Brandt, Ernst-Ulrich, Dipl.-Phys., Dipl.-Ing.

(56) Entgegenhaltungen:
- DE-A- 3 303 588
- DE-A- 3 744 631
- JP-A-52 079 401
- PATENT ABSTRACTS OF JAPAN, Bd. 13, Nr. 7 (P-810)(3355) 10. Januar 1989;& JP-A-63214641

## Beschreibung

Die Erfindung betrifft ein Verfahren und eine Vorrichtung zur Lenkung abrollender Räder eines Fahrzeugs auf Prüfständen zur Bestimmung seiner beim tatsächlichen Betrieb auftretenden Eigenschaften.

Fahrzeugprüfstände dienen unter anderem dazu, bei der Entwicklung und Fertigung von Kraftfahrzeugen beispielsweise das Bremsverhalten der Fahrzeuge zu testen. Auch werden derartige Prüfstände, bei welchen es sich um solche mit Flachbahneinheiten oder Lauftrommeln handeln kann, eingesetzt, um Sturz und Spur des Fahrzeugs zu vermessen und auch dazu das Verhalten des Fahrzeugs beim tatsächlichen Betrieb zu testen oder vorher auf Teststrecken aufgenommene Parameter, beispielsweise über Einfederung und Wanken bzw. Gieren eines Fahrzeugs auf die Antriebseinheit des Flachbahn- oder Trommelprüfstands zu übertragen, um mittels dieser ausgewählten Betriebszustände bereits fertige Fahrzeuge zu testen. Aus diesen Testergebnissen können dann die Fahrzeuge im Hinblick auf die zu erwartenden Gegebenheiten verbessert werden.

Um solche Versuche durchführen zu können, ist es bisher bekannt, die Fahrzeuge mit einem Fahrer zu besetzen, der entweder mit Hilfe der abrollenden Räder bei im Betrieb befindlicher Antriebsmaschine des Fahrzeugs den Prüfstand antreibt, oder bei welchem der angetriebene Prüfstand die auf diesem abrollenden Räder ohne Eigenantrieb bewegt. Auch kann eine Kombination auf diesen Prüfständen dargestellt werden, bei welchem sowohl die Prüfstandsrollen oder Flachbahnen als auch das Fahrzeug angetrieben werden.

Weitere Möglichkeiten, ein Fahrzeug bei seiner Untersuchung auf dem Prüfstand zu halten, bestehen in einer sogenannten Fesselung des Fahrzeugs am Prüfstand, mit anderen Worten ein Verzurren der Karosserie am Prüfstand oder an der umgebenden Arbeitsebene so, daß das Fahrzeug auch bei Fehlbelastungen den Prüfstand nicht verlassen kann.

Weiterhin ist es möglich, durch ein Lenksystem das Fahrzeug ohne Fahrer durch Nachführung der Lenkung in Spur zu halten und somit Testläufe durchzuführen.

Die oben aufgeführten Maßnahmen zum seitlichen Halten des Fahrzeugs auf Prüfständen werden auch bei Prüfständen verwendet, bei welchen entweder nur die gelenkte Achse des Fahrzeugs oder nur die nichtgelenkte Achse des Fahrzeugs mit einem Prüfstand in Verbindung gebracht werden; dabei kann der Antrieb des Fahrzeugs sowohl über die gelenkten Räder oder auch über die nichtgelenkten Räder auf den Prüfstand wirken.

Die oben genannten Lenksysteme korrigieren die seitlichen Bewegungen des Fahrzeugs durch Betätigung des Fahrzeuglenkrads. Ein bekanntgewordenes passives System besteht darin, daß das Lenkrad über eine Stange oder ähnliches quer zum Fahrzeug auf einem festen Punkt am Gebäude oder Fundament gelenkig abgestützt wird, so daß sich das Fahrzeug bei Bewegungen selbst lenkt, aber nur dann, wenn keine größeren vertikalen Anregungen im Prüfstand auftreten können.

Treten bei Fahrzeugprüfständen aber auch stärkere vertikale Anregungen auf, sei es durch Überlagerung von Einflußgrößen in der Horizontalen oder gewollt durch zusätzliche vertikale Anregungen, welche beispielsweise die Unebenheiten einer Fahrbahn abbilden, somit im allgemeinen jedes Rad verschieden belasten und die auf die abrollenden Räder über die Prüfstandsrollen oder Flachbahnen aufgebracht werden, so werden im Fahrzeug stärkere vertikale Bewegungen verursacht, unter anderem tritt auch Wanken auf. Unter Wanken ist hierbei eine Rollbewegung des Fahrzeugs um eine Fahrzeuglängsachse zu verstehen, die sich in Abhängigkeit von der jeweiligen Einfederung der Fahrzeugräder im allgemeinen aus ihrer Nullposition heraus bewegt. Durch diese Wankbewegungen führt die starre, gelenkig abgestützte Stange zu unnötigen Bewegungen des Lenkrads, einem Auswandern des Fahrzeugs aus seiner Nullage, und auch zu einer instabilen Lenkbarkeit. Wird die seitliche Auswanderung durch eine seitliche Fesselung beispielsweise ein Verzurren des Fahrzeugs verhindert, werden zwangsläufig Zwangskräfte in das Fahrzeug eingeleitet, die die Testergebnisse negativ beeinflussen.

Aus der DE-A1-3303588 ist ein Verfahren und eine Vorrichtung bekannt, bei der eine Reibrolle ein Lenkrad in Abhängigkeit von in seitlichen Abständen außerhalb des Fahrzeugs angeordneten Sensoren so gesteuert wird, daß die seitlichen Fahrzeugbewegungen auf einem Rollenprüfstand ausgeglichen werden. Bei diesem Verfahren ist nicht ersichtlich, daß die Wankbewegungen eines Fahrzeugs durch starke Vertikalanregungen ausgeglichen werden können, so daß bereits eine seitliche Auslenkung durch Wankbewegungen zu einer Lenkkorrektur führt, durch die ein instabiles Fahrzeugverhalten auf dem Prüfstand hervorrufbar ist.

Der Einsatz eines Fahrers erfordert zusätzliche Kosten und die Meßergebnisse sind vom subjektiven Verarbeiten einer Situation durch den Menschen beeinflußt. Es ist somit in Frage gestellt, ob die entsprechend den vertikal eingeleiteten Anregungen auf dem Prüfstand eingestellten Fahrzeuge, also der Fahrkomfort, reproduzierbar auf das tatsächliche Fahrverhalten beim freien Fahren des Fahrzeugs übertragbar ist.

Ausgehend von diesem Stand der Technik liegt der vorliegenden Erfindung die Aufgabe zugrunde, bereits auf dem Prüfstand Meßergebnisse über den Fahrkomfort, zu dem neben den Wankbewegungen und Gierbewegungen des Fahrzeugs selbst auch die Vermeidung von Fahrgeräuschen im Inneren des Fahrzeugs gehören, zu erhalten und beispielsweise auch aus Untersuchungen Ergebnisse über die Geräusche sich gegen die Karosserie bewegender geschlossener Fahrzeugöffnungen, wie Kofferraumdeckel und Kühlerhaube, bei Einwirkung stärkerer vertikaler Anregungen, zu erhalten, ohne daß eine die Meßergebnisse beeinflussende seitliche Fesselung des Fahrzeugs erforderlich ist, und daß auch die bei großen vertikalen Bewegungen auftretenden Wankanteile keine zusätzlichen Lenkbewegungen initiieren.
Diese Aufgabe wird durch die kennzeichnenden Merkmale des Verfahrensanspruchs 1 gelöst. Durch die Nachkorrektur der lenkbaren Räder allein in Abhängigkeit der zufolge einer seitlichen Bewegung des Fahrzeugs auftretenden meßbaren seitlichen Auslenkungen eines Punktes eines Fahrzeugteils aus seiner Ruhelage gegenüber einem außerhalb des Fahrzeugs vorhandenen ruhenden Referenzpunkt wird bei großen vertikalen Anregungen erreicht, das Fahrzeug ohne seitliche Fesselung auf dem Prüfstand zu halten bei gleichzeitiger Vermeidung aller Zwangskräfte.

Insbesondere wird durch das praktische Vernachlässigen der Drehbewegungen weiterhin erreicht, daß durch eine derartige Führung des zu untersuchenden Fahrzeugs es gewährleistet ist, daß ohne seitliche Fesselung derartige Untersuchungen auch auf Flachbahnprüfständen durchgeführt werden können, bei welchen beispielsweise jedes Rad des lenkbaren Räderpaares auf einer schmalen, vertikal beweglichen Flachbahn aufsteht.

In Ausgestaltung dieses Erfindungsgedankens wird gemäß Kennzeichen des Anspruchs 2 unter Schutz gestellt, daß der Lenkpunkt am Fahrzeug gegenüber dem Meßpunkt für die Bestimmung der Auslenkung des Fahrzeugs räumlich getrennt sind. Hierdurch ist es möglich, entsprechend den örtlichen Gegebenheiten an einer gesamten Seite des Fahrzeugs dessen Seitenbewegungen, also das Wanken, festzustellen, und ieraus die Lenkung nur so zu beeinflussen, daß eine Überkompensation, was zu Fehlmessungen führen würde, nicht stattfindet und daß auch beispielsweise Fehler durch eine Fesselung eines Fahrzeugs nicht auftreten können.

In noch weiterer Ausgestaltung des Verfahrens wird gemäß Anspruch 3 vorgeschlagen, bei vorzuspannenden Übertragungsmitteln, die nur in einer Richtung Kräfte übertragen, die Vorspannung praktisch in der Lenkebene wirken zu lassen. Hierdurch wird errreicht, daß das Vorspannelement selbst nicht in der Lenkebene angeordnet sein muß.

Die der Erfindung zugrundeliegende Aufgabe läßt sich ausgehend von einer Einrichtung bestehend aus einem auf einem Prüfstand befindlichen Fahrzeug, dessen Räder auf dem Prüfstand abrollen, durch die kennzeichnenden Merkmale des Anspruchs 4 lösen, welcher auch insbesondere geeignet ist, ein Verfahren nach dem Anspruch 2 zu verwirklichen.

Diese Einrichtung mißt bei der Einleitung großer vertikaler Bewegungen über den Prüfstand auf mindestens ein Paar der abrollenden Räder des Fahrzeugs die seitliche Bewegung eines Teils des Fahrzeugs über mindestens eine Abtaststelle gegenüber einem Fixpunkt, so daß lediglich in Abhängigkeit der seitlichen Bewegung aus der Abstandsdifferenz des Fahrzeugs die lenkbaren Räder von einem Lenkpunkt aus gelenkt, werden unter praktischem Ausschluß des Wankanteils. Ein Ausbrechen des Fahrzeugs im Prüfstand oder ein Herausschleudern des Fahrzeugs aus dem Prüfstand wird vermieden, ohne daß eine zusätzliche seitliche Fesselung des Fahrzeugs erforderlich wird, welche eine Beeinflussung gemessener Werte und gleichzeitig eine Beeinflussung eines danach eingestellten Fahrzeugs verursachen würde, die zur Nichtreproduzierbarkeit der Einstellung eines Fahrzeugs führen wird.

Mit Anspruch 5 wird eine weitere Vorrichtung zur Durchführung des Verfahrens, insbesondere zur Durchführung des Verfahrens nach Anspruch 3, unter Schutz gestellt, bei der ein Seil den Referenzpunkt über Umlenkungen mit einem einstellbaren Radius des Lenkrads des zu untersuchenden Fahrzeugs verbindet und bei der gleichzeitig der einstellbare Radius am Lenkrad über eine eine Vorspannung liefernde Feder mit einer Stelle des sich bewegenden Fahrzeugs verbunden wird. Hierbei muß die die Vorspannung für das Seil liefernde Feder nicht in der selben Ebene wie das Seil liegen, sondern durch entsprechende Umlenkungen an einem beliebigen Ort innerhalb oder außerhalb des Fahrgastraums am bewegenden Fahrzeug angeordnet sein.

Eine noch weitere Vorrichtung zur Durchführung des Verfahrens wird in Anspruch 6 unter Schutz gestellt. Hierbei wird eine Hydraulik bestehend aus Hydraulikzylinder und Hydraulikkolbenstange zwischen dem Referenzpunkt und einem Meßpunkt an der Karosserie angeordnet. Bewegt sich nunmehr die Karosserie zufolge vertikaler Bewegungen seitlich, so werden die Informationen über die seitliche Bewegung über das Hydraulikmedium und über Schläuche, welche mit einem weiteren Hydraulikzylinder verbunden sind, der sich am Fahrzeug abstützend mit dessen Lenkrad an einem einstellbaren Radius verbunden ist, diese Informationen an den zweiten Hydraulikzylinder weitergegeben. Zufolge der dem Hydraulikmedium aufgeprägten Informationen wird nunmehr die Kolbenstange des weiteren Hydraulikzylinders, welche gelenkig mit einem Punkt eines einstellbaren Radius des Lenkrads verbunden ist, dazu verwendet, das Lenkrad entsprechend den seitlichen Bewegungen unter praktischer Vernachlässigung der Wankbewegungen, zu betätigen und hierdurch eine Lenkkorrektur auf dem Prüfstand durchzuführen.

Anstelle einer hydraulischen Übertragung kann auch in der selben Weise eine pneumatische Übertragung für eine Lenkkorrektur eingesetzt werden.

Mit dem Anspruch 7 wird eine noch weitere Vorrichtung unter Schutz gestellt, bei welcher in Abhängigkeit der jeweiligen Abstandsänderung ein elektrisches Signal einer Steuereinrichtung zugeführt wird, wobei dieses Steuersignal einer Betätigungseinrichtung zugeführt wird. Hierbei ist die Betätigungseinrichtung bevorzugt im Inneren des Fahrgastraums gelenkig angeordnet und wirkt mit einem einstellbaren Radius des Lenkrads, mit welchem es gelenkig verbunden ist, zusammen. Hierdurch können in aktiver Weise korrigierende Lenkbewegungen auf die gelenkten Räder übertragen werden.

In Ausgestaltung des Erfindungsgegenstandes wird gemäß Anspruch 8 eine Einrichtung unter Schutz gestellt, bei der mindestens eine Abtaststelle gegenüber dem Lenkpunkt verschoben ist. Hierdurch wird erreicht, daß unabhängig vom Lenkpunkt zum einen an verschiedenen Stellen einer Seite des Fahrzeugs die Wankungen beispielsweise der Karosserie bestimmt werden können und daß bei der Messung über eine Seite in Längsrichtung und über die Höhe des Fahrzeugs festgestellt werden kann, welche weiteren Bewegungen das Fahrzeug zufolge des Wankens ausführt. Hieraus lassen sich auch Schlüsse über den Einfluß von Öffnungen in der Karosserie gewinnen, beispielsweise Fensteröffnungen oder auch Einflüsse von Dachöffnungen oder mit der Karosserie verbundene Radkästen. Aufgrund dieser Untersuchungen lassen sich dann auch bei der Entwicklung sowohl die Federungseigenschaften des Fahrzeugs und auch dessen Geräuschempfindlichkeit verbessern.

In der nachfolgenden Beschreibung wird anhand von Ausführungsbeispielen die Erfindung näher erläutert.

Es zeigt
- Figur 1: Eine erste Einrichtung zur passiven Lenkung eines mit großen vertikalen Anregungen beaufschlagten Fahrzeugs, dessen Lenkrad mit einem ruhendem Referenzpunkt außerhalb des Fahrzeugs verbunden ist.
- Figur 2: Eine weitere Einrichtung zur passiven Lenkung eines Fahrzeugs
- Figur 3: Eine noch weitere Einrichtung zur passiven Lenkung eines Fahrzeugs
- Figur 4: Eine Einrichtung zur aktiven Lenkung eines Fahrzeugs

In den einzelnen Figuren werden gleiche Bauteile mit den selben Bezugszeichen versehen.

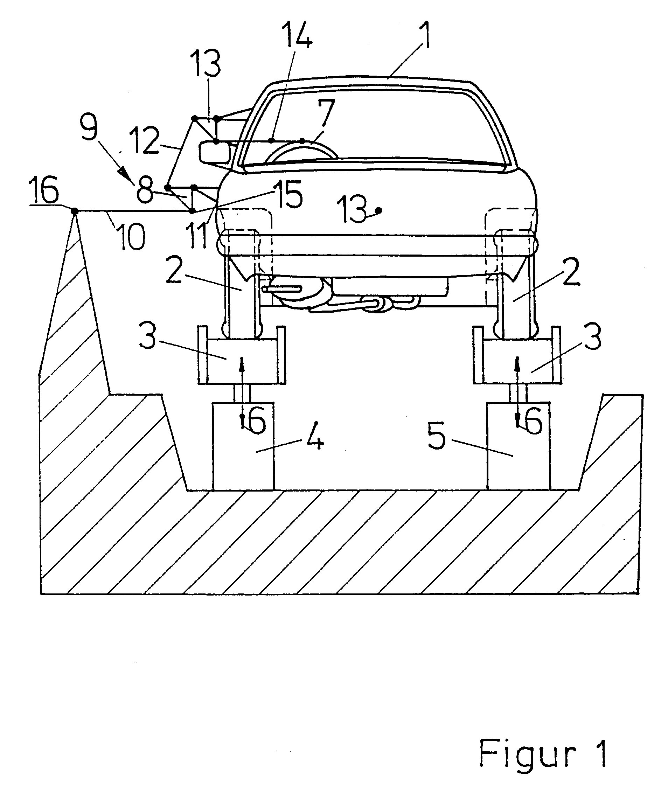

Gemäß Figur 1 rollt ein Fahrzeug 1 mit seinen gelenkten Rädern 2 auf einem Prüfstand 3 ab. Es ist hierbei gleichgültig, ob es sich bei diesem Prüfstand 3 um einen Trommelprüfstand oder einen Flachbahnprüfstand handelt, wie er in Figur 1 dargestellt ist. Ebenso ist es für die Erfindung gleichgültig, ob die abrollenden gelenkten Räder 2 vom Fahrzeug 1 angetrieben werden oder vom Prüfstand 3 angetrieben werden oder ob Prüfstand 3 und gleichzeitig das Fahrzeug 1 angetrieben wird.

Der Prüfstand 3 stützt sich auf einer Einrichtung 4 und einer weiteren Einrichtung 5 ab, welche zur Einleitung vertikaler Anregungen ausgebildet sind. Doppelpfeile 6 veranschaulichen, daß die Einrichtung 4 und die weitere Einrichtung 5 vertikale Anregungen durchführen können, und zwar unabhängig voneinander, so daß beispielsweise die Flachbahnprüfstände 3 verschieden starke vertikale Anregungen auf die gelenkten Räder 2 übertragen, wobei auch noch die Frequenz der vertikalen Anregung zwischen der Einrichtung 4 und der weiteren Einrichtung 5 verschieden groß sein können, so daß neben einem Schrägstellen des Fahrzeugs 1 auch die verschiedenen Anregungsfrequenzen zum tragen kommen, welche die Lenkung des Fahrzeugs 1 beeinflussen und somit zu einer Lenkkorrektur führen werden, welche an einem Lenkrad 7 in Erscheinung tritt. Anstelle des Lenkrads 7 können auch die gelenkten Räder 2 oder auch das nicht dargestellte Lenkungsgestänge, beispielsweise die Spurstange am Fahrzeug, als Angriffspunkt für die Lenkkorrektur, die, wie oben dargestellt, hervorgerufen wurde, verwendet werden.

Durch die Anordnung eines Gestänges 9, welches aus einer im Grundzustand, d. h. in der Mittelstellung der Vertikalanregung, waagerechten Stange 10 und einer Umlenkung 8 bestehen, werden im Fall der Figur 1 lediglich die seitlichen Bewegungen, jedoch praktisch nicht die Drehanteile beim Wanken des Fahrzeugs 1 durch Abtasten seiner Karosserie 11 weitergegeben, wenn die waagerechte Stange 10 ohne Wanken des Fahrzeugs 1 in der Höhe von der Wankachse 13 angeordnet ist. Es wird also hierdurch erreicht, daß der karosserieseitige Endpunkt der Stange 10 praktisch keine seitliche Bewegung beim Wanken des Fahrzeugs durchführt. Die andere Seite der Stange 10 ist an einem festen Punkt des Gebäudes oder des Prüfstands gelenkig befestigt und dient somit als ruhender Referenzpunkt 16.

Die Umlenkung 8 überträgt die gegenüber dem karosserieseitigen Ende der Stange 10 festgestellte seitliche Bewegung des Fahrzeugs über eine gelenkig angeschlossene starre Verbindungsstange 12 einer am Fahrzeug befestigten weiteren Umlenkung 13 und einer ebenfalls gelenkig angeschlossenen starren Lenkstange 14 auf das Lenkrad 7. Dabei ist die Lenkstange 14 auf einen einstellbaren Radius des Lenkrades 7 gelenkig angeschlossen.

Im einfachsten Fall besteht der einstellbare Radius aus einer mit dem Drehpunkt des Lenkrads und dem Umfang des Lenkrads verbundenen Stange beliebiger Länge, die also auch über das Lenkrad hinausragen kann. Durch Verschieben des Angriffspunktes der Lenkstange 14 kann die Empfindlichkeit der Lenkreaktion beeinflußt werden.

Die Hebelverhältnisse der Umlenkungen 8 und der weiteren Umlenkung 13 sind ebenfalls einstellbar. Dadurch ist eine Anpassung der Verstärkung des Gestänges 9 an die Übersetzung der Fahrzeuglenkung möglich.

Dieses Gestänge 9 ist insbesondere als eine erfinderische Ausgestaltung für eine passive Lenkung eines zu untersuchenden Fahrzeugs 1 anzusehen; wobei unter passiver Lenkung das Gestänge 9 zu verstehen ist, durch welches ohne zusätzliche zugeführte Energie das Fahrzeug 1 über das Lenkrad 7 gelenkt wird. Im Gegensatz hierzu wird unter aktiver Lenkung das Lenken des Fahrzeugs 1 mit zusätzlich zugeführter Energie verstanden.

Durch die in Figur 1 dargestellte passive Lenkung des Fahrzeugs auf dem Prüfstand wird das Fahrzeug zwar in Abhängigkeit auftretender seitlicher Bewegungen des Fahzeugs, jedoch praktisch ohne Einflüsse von Wankbewegungen, gelenkt. Diese passive Lenkung, durch die der Drehanteil beim Wanken des Fahrzeugs praktisch kompensiert wird, gestattet es das zu untersuchende Fahrzeug auch auf den schmalen Flachbahnen eines Prüfstands allein durch passives Lenken sicher zu führen.

Durch die Einstellbarkeit und Verstellbarkeit der waagerechten Stange 10 entsprechend der Wankachse des zu untersuchenden Fahrzeugs, des ruhenden Referenzpunkts 16, der Umlenkung 8 und weitere Umlenkung 13 und der Verbindungsstange 12 und der Lenkstange 14 läßt sich eine derartige Gestängeanordnung an jeder Stelle einer Seite der Karosserie des Fahrzeugs 1 anbringen. Es ist hierbei nicht erforderlich, daß die waagerechte Stange 10 stets in einer vertikalen Ebene unter der Lenkstange 14 angeordnet ist. Damit kann auch die seitliche Bewegung einer Seite des Fahrzeugs unter Wankeinfluß vermessen werden.

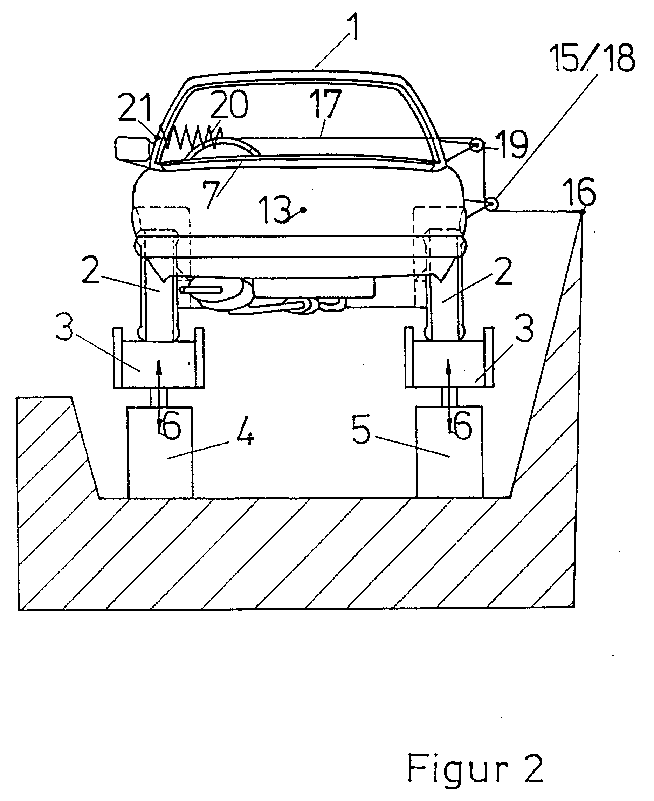

Die in Figur 2 dargestellte Ausführungsform einer passiven Lenkung mit Wankausgleich zeigt das Fahrzeug 1, welches mit den gelenkten Rädern 2 auf dem Fahrzeugprüfstand mit Flachbahnen 3 steht, welcher durch die Einrichtung 4 und die weitere Einrichtung 5 in vertikaler Richtung 6 bewegt wird.

Der Referenzpunkt 16 ist in diesem Fall über ein Seil 17, über eine untere Umlenkrolle 18 und einer oberen Umlenkrolle 19 mit einem Radius des Lenkrades 7 verbunden. Anstelle von Umlenkrollen können auch Gleitschuhe verwendet werden. Das Seil 17 stellt ein Mittel dar, mit welchem die Kraft nur in einer Richtung weitergegeben werden kann; nur bei Vorspannung kann die Kraft in zwei Richtungen zur Wirkung kommen. Dabei dient die untere Umlenkrolle 18 gleichzeitig als Meßpunkt 15 zur Feststellung der seitlichen Auslenkung des Fahrzeuges. Die untere Umlenkrolle 18 und die obere Umlenkrolle 19 sind an dem Fahrzeug 1 lösbar befestigt, die untere Umlenkrolle 18 vorzugsweise in der Höhe der Wankachse 13 des Fahrzeuges 1 jedoch so, daß das Seil 17 zwischen dem Meßpunkt 15 und dem Referenzpunkt 16 praktisch waagrecht verläuft, wenn sich das Fahrzeug im Grundzustand befindet.

Eine Feder 20, deren Material aus Metall, Nichtmetall, Kunststoff oder einem Fluid bestehen kann, die als Vorspannung wirkt, ist an dem Fahrzeug 1 an einem Punkt 21 und an dem Lenkrad 7 an einem Radius befestigt, und bewirkt, daß das Seil 17 in beiden Richtungen Kräfte übertragen kann. Hierbei muß der Punkt 21 nicht an der in Figur 2 gezeigten Stelle angeordnet sein, sondern kann an beliebigen Stellen im Innern des Fahrzeugs sein, wenn nur Sorge dafür getragen wird, daß die Wirkrichtung der Feder 20 in eine Ebene zum einstellbaren Radius sich befindet. Durch die vorbeschriebene Anordnung wird nun die seitliche Bewegung des Fahrzeuges 1 am Meßpunkt 15 als Lenkkorrektur auf das Lenkrad 7 übertragen, wobei der Einfluß des Wankens um die Wankachse 13 praktisch ausgekoppelt ist.

Bei der Vorrichtung ist es gleichgültig, ob die untere Umlenkrolle 18 und die oberer Umlenkrolle 19 in einer Ebene senkrecht übereinander liegen oder nicht.

Durch die Anpassung des Angriffspunktes des Seils 17 am Radius des Lenkrads 7 kann die Verstärkung der Lenkeinrichtung an die Übersetzung der Fahrzeuglenkung angepaßt werden.

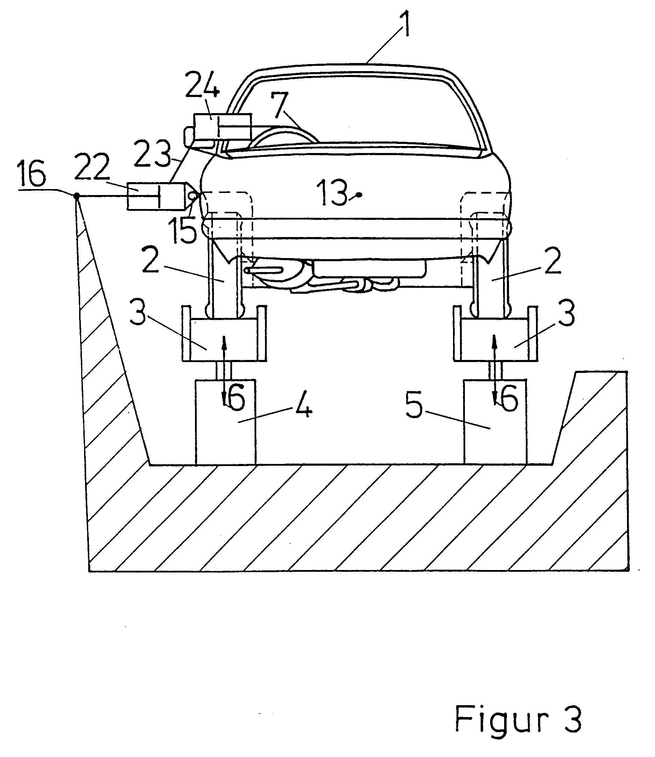

Die in Figur 3 dargestellte Ausführungsform einer weiteren passiven Lenkung mit Wankausgleich zeigt das Fahrzeug 1, welches mit den gelenkten Rädern 2 auf dem Fahrzeugprüfstand mit Flachbahnen 3 steht, welcher durch die Einrichtung 4 und die weitere Einrichtung 5 in vertikaler Richtung 6 bewegt wird.

Der Referenzpunkt 16 ist in diesem Fall über einen im Grundzustand des Fahrzeuges praktisch waagrecht liegendem Hydraulikzylinder mit Kolbenstange 22 mit dem Meßpunkt 15 des Fahrzeuges verbunden, und daß er vorzugsweise in Höhe der Wankachse 13 liegt. Dieser Hydraulikzylinder mit Kolbenstange 22 ist über Hydraulikschläuche 23 mit einem weiteren Hydraulikzylinder mit einer weiteren Kolbenstange 24 verbunden, der mit seiner Kolbenstange an einem einstellbaren Radius des Lenkrades 7 angreift. Durch die seitliche Bewegung des Meßpunktes 15 wird nun im Hydraulikzylinder mit Betätigungsstange 22 ein Hydraulikmedium verdrängt und über die Schläuche 23 in den weiteren Hydraulikzylinder mit weiterer Kolbenstange 24 geleitet, so daß die Kolbenstange die seitliche Bewegung des Meßpunktes 15 als Lenkkorrektur auf den einstellbaren Radius des Lenkrades 7 überträgt. Dabei stellt der einstellbare Radius des Lenkrades 7 die Anpassung der Verstärkung dar.

Der Vorteil dieser Vorrichtung ist, daß diese über dünne Schläuche 23 betrieben werden kann, welche bei geschlossener Tür durch die Türdichtung des Fahrzeuges 1 geführt werden können. Dadurch sind Versuche mit geschlossenen Türen und Fenstern des Fahrzeuges möglich.

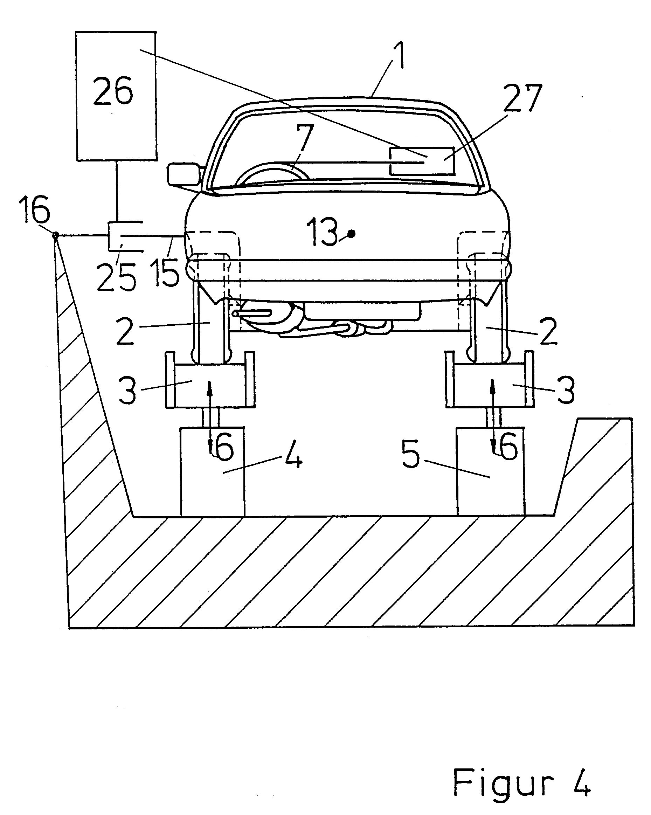

Die in Figur 4 dargestellte Ausführungsform einer aktiven Lenkung mit Wankausgleich zeigt das Fahrzeug 1, welches mit den gelenkten Rädern 2 auf dem Fahrzeugprüfstand mit Flachbahnen 3 steht, welcher durch die Einrichtung 4 und die weitere Einrichtung 5 in vertikaler Richtung 6 bewegt wird.

Der Referenzpunkt 16 ist in diesem Fall über eine im Grundzustand des Fahrzeuges 1 praktisch waagrecht liegende Wegmeßeinrichtung 25 mit dem Meßpunkt 15 des Fahrzeuges verbunden, und daß diese Wegmeßeinrichtung 25 vorzugsweise in der Höhe der Wankachse 13 liegt. Bei der Wegmeßeinrichtung kann es sich vorzugsweise um induktive, widerstands- oder berührungslose, wie Licht, verwendende Meßeinrichtungen handeln. Die Wegmeßeinrichtung 25 meldet die seitliche Auslenkung des Meßpunktes 15 des Fahrzeuges an eine Steuerung 26. Diese wertet das Signal aus und gibt eine Lenkkorrektur an das aktive Stellelement 27 aus. Dieses aktive Stellelement 27 stützt sich auf der einen Seite am Fahrzeug und auf der anderen Seite auf einem einstellbaren Radius des Lenkrades 7 ab und überträgt so die Lenkkorrektur auf das Lenkrad 7.

Das aktive Stellelement 27 ist vorzugsweise als elektrisches Element wie zum Beispiel eine Elektrospindel ausgeführt, jedoch sind auch andere Ausführungen mit geregelten Pneumatik- und Hydraulikzylindern möglich.
Auch bei dieser Ausführung der Lenkvorrichtung sind Versuche mit geschlossenen Fenstern und Türen des Fahrzeuges 1 möglich.

## Patentansprüche

1. Verfahren zur Lenkung abrollender Räder eines Fahrzeugs (1) auf einem Prüfstand zur Bestimmung seiner beim tatsächlichen Betrieb auftretenden Eigenschaften, dadurch gekennzeichnet, daß von den bei großen vertikalen Anregungen des Fahrzeugs über die Fahrzeugräder auftretenden Dreh- und seitlichen Bewegungen des Fahrzeugs mindestens ein Paar der abrollenden lenkbaren Räder (2) gelenkt wird, in Abhängigkeit der zufolge der seitlichen Bewegungen des Fahrzeugs (1) auftretenden meßbaren seitlichen Auslenkungen eines Fahrzeugteils als Meßpunkt (15) aus seiner Ruhelage gegenüber einem außerhalb des Fahrzeugs (1) vorhandenen, von den vertikalen Anregungen unbeeinflußten, Referenzpunkt (16), wobei die seitliche Auslenkung des Fahrzeugsteils in einer Ebene gemessen wird, die sich in vertikaler Höhe der Wankachse (13) befindet.

2. Verfahren nach Anspruch 1, dadurch gekennzeichnet, daß ein Lenkpunkt (7) am Fahrzeug gegenüber dem Meßpunkt (15) für die Bestimmung der Auslenkung des Fahrzeugs räumlich getrennt sind.

3. Verfahren nach Anspruch 1 oder 2, dadurch gekennzeichnet, daß bei vorzuspannenden Übertragungsmitteln (17) die Vorspannung (20) praktisch in der Lenkebene wirkt.

4. Vorrichtung zur Durchführung des Verfahrens nach einem der vorhergehenden Ansprüche mit einem auf einem Prüfstand befindlichen Fahrzeug (1), das in Fahrtrichtung an einer Stelle fixiert ist und dessen Räder (2) auf dem Prüfstand abrollen, dadurch gekennzeichnet, daß bei Einleitung großer vertikaler Bewegungen (6) über den Prüfstand auf mindestens ein Paar der abrollenden Räder (2) des Fahrzeugs (1) die seitlichen Bewegungen des Fahrzeugs (1) gegenüber einem Referenzpunkt (16) über eine mit einer lösbar an der Karosserie (11) des Fahrzeugs (1) verbundenen Umlenkung (8) gelenkig verbundenen Stange (10), einer an der Umlenkung (8) gelenkig angeordneten Verbindungsstange (12) einer weiteren lösbar an der Karosserie (11) des Fahrzeugs (1) angeordete Umlenkung ableitbar sind und daß über eine gelenkig an der Umlenkung angeordnete Lenkstange (14) entsprechend einem einstellbaren Radius an einem Lenkrad (7) auf das Lenkrad (7) nur die praktisch horizontal wirkenden seitlichen Bewegungskomponenten des Fahrzeugs (1) zur Ausführung von Korrekturbewegungen dienen, in dem die Stange (10) in der Höhe der Wankachse (13) angeordnet ist.

5. Vorrichtung zur Durchführung des Verfahrens nach einem der Ansprüche 1 bis 3, insbesondere nach Anspruch 3, mit einem auf einem Prüfstand befindlichen Fahrzeug (1), das in Fahrtrichtung an einer Stelle fixiert ist und dessen Räder (2) auf dem Prüfstand abrollen, dadurch gekennzeichnet, daß bei Einleitung großer vertikaler Bewegungen (6) über den Prüfstand auf mindestens ein Paar der abrollenden Räder (2) des Fahrzeugs (1) die seitlichen Bewegungen des Fahrzeugs (1) gegenüber einem Referenzpunkt (16) über ein Seil (17) über eine lösbar mit der Karosserie (11) des Fahrzeugs (1) verbundene untere Umlenkrolle (18) in der Höhe der Wankachse (13), und eine ebenfalls lösbar mit der Karosserie (11) des Fahrzeugs (1) verbundene obere Umlenkrolle (19) ableitbar sind und das Seil (17) mit einem einstellbaren Radius eines Lenkrads (7) verbunden ist, und daß am einstellbaren Radius (21) des Lenkrads (7) eine an der Karosserie (11) des Fahrzeugs (1) angeordnete Feder (20) angreift, wobei auf das Lenkrad (7) praktisch horizontal wirkenden seitlichen Bewegungskomponenten des Fahrzeugs (1) zur Ausführung von Korrekturbewegungen dienen.

6. Vorrichtung zur Durchführung des Verfahrens nach einem der Ansprüche 1 bis 3 mit einem auf einem Prüfstand befindlichen Fahrzeug (1), das in Fahrtrichtung an einer Stelle fixiert ist und dessen Räder (2) auf dem Prüfstand abrollen, dadurch gekennzeichnet, daß bei Einleitung großer vertikaler Bewegungen (6) über den Prüfstand auf mindestens ein Paar der abrollenden Räder (2) des Fahrzeugs (1) die seitlichen Bewegungen des Fahrzeugs (1) gegenüber einem Referenzpunkt (16) über einen Hydraulikzylinder mit Kolbenstange (22) ableitbar sind, der im Ruhezustand an einem Meßpunkt (15) der Karosserie (11) des Fahrzeugs (1) in Höhe der Wankachse (13) anliegt und daß bei Einleitung der großen vertikalen Bewegungen (6) in Abhändigkeit einer Verdrängung des Hydraulikmediums über Hydraulikschläuche (23) in einem weiteren Hydraulikzylinder mit Kolbenstange (24), die mit einem einstellbaren Radius eines Lenkrads (7) gelenkig verbundene Kolbenstange, Lenkkorrekturen an das Lenkrad (7) weitergibt, wobei auf das Lenkrad (7) nur die praktisch horizontal wirkenden seitlichen Bewegungskomponenten des Fahrzeugs (1) zur Ausführung von Korrekturbewegungen dienen.

7. Vorrichtung zur Durchführung des Verfahrens nach einem der Ansprüche 1 bis 3 mit einem auf einem Prüfstand befindlichen Fahrzeug (1), das in Fahrtrichtung an einer Stelle fixiert ist und dessen Räder (2) auf dem Prüfstand abrollen, dadurch gekennzeichnet, daß bei Einleitung großer vertikaler Bewegungen (6) über den Prüfstand auf mindestens ein Paar der abrollenden Räder (2) des Fahrzeugs (1) die seitlichen Bewegungen des Fahrzeugs (1) gegenüber einem Referenzpunkt (16) über eine zwischen einem an der Karosserie (11) vorhandenen Meßpunkt (15) in Höhe der Wankachse (13) und dem Referenzpunkt (16) vorgesehene Wegmeßeinrichtung (25) erfaßbar ist und daß in Abhängigkeit der seitlichen Bewegung des Meßpunktes (15), bei Einleitung großer vertikaler Bewegungen ein Steuersignal von der Wegmeßeinrichtung (25) einer Steuerung (26) zuführbar ist, daß hieraus ein Signal für eine Lenkkorrektur bildet und an ein Stellelement (27) weitergibt und daß das Stellelement (27) einerseits lösbar an der Karosserie (11) des Fahrzeugs (1) abgestützt und andererseits gelenkig mit einem einstellbaren Radius eines Lenkrads (7) verbunden ist und daß das Lenkrad (7) in Abhängigkeit der Lenkkorrektur betätigbar ist, wobei auf das Lenkrad (7) nur die praktisch horizontal wirkenden seitlichen Bewegungskomponenten des Fahrzeugs (1) zur Ausführung von Korrekturbewegungen dienen.

8. Vorrichtung nach einem der Ansprüche 4 bis 7, dadurch gekennzeichnet, daß die mindestens eine Abtaststelle (15) gegenüber einem Lenkpunkt (7) verschoben ist.

## Claims

1. Method of steering revolving wheels of a vehicle (1) on a test bed for determining the vehicle properties arising under actual operating conditions, characterized in that at least one pair of the revolving steerable wheels (2) is steered by the rotational and lateral movements of the vehicle, which occur in the event of strong vertical excitations of the vehicle via the vehicle wheels, as a function of the measurable lateral excursions, occurring as a result of the lateral movements of the vehicle (1), of a vehicle part as a measuring point (15) out of its position of rest relative to a reference point (16) provided outside of the vehicle (1) and not influenced by the vertical excitations, the lateral excursion of the vehicle part being measured in a plane which is situated at the vertical height of the rolling axis (13).

2. Method according to claim 1, characterized in that a steering point (7) on the vehicle is spatially separated from the measuring point (15) for determining the excursion of the vehicle.

3. Method according to claim 1 or 2, characterized in that, given transmission means (17) which are to be prestressed, the prestressing device (20) acts substantially in the steering plane.

4. Device for effecting the method according to one of the preceding claims, having a vehicle (1) which is situated on a test bed, is fixed at one point in the direction of travel and whose wheels (2) revolve on the test bed, characterized in that, upon introduction of strong vertical movements (6) via the test bed to at least one pair of the revolving wheels (2) of the vehicle (1), the lateral movements of the vehicle (1) relative to a reference point (16) may be diverted via a rod (10), which is connected in an articulated manner to a deflection device (8) detachably connected to the bodywork (11) of the vehicle (1), to a connecting rod (12) - disposed in an articulated manner on the deflection device (8) - of a further deflection device detachably disposed on the bodywork (11) of the vehicle (1) and that by means of a steering rod (14), which is disposed in an articulated manner on the deflection device, in accordance with an adjustable radius at a steering wheel (7) only the substantially horizontally effective lateral movement components of the vehicle (1) are used upon the steering wheel (7) to execute corrective movements, in that the rod (10) is disposed at the height of the rolling axis (13).

5. Device for effecting the method according to one of claims 1 to 3, in particular according to claim 3, having a vehicle (1) which is situated on a test bed, is fixed at one point in the direction of travel and whose wheels (2) revolve on the test bed, characterized in that, upon introduction of strong vertical movements (6) via the test bed to at least one pair of the revolving wheels (2) of the vehicle (1), the lateral movements of the vehicle (1) relative to a reference point (16) may be diverted by means of a cable (17) via a bottom deflection roller (18), which is detachably connected to the bodywork (11) of the vehicle (1) at the height of the rolling axis (13), and a top deflection roller (19), which is likewise detachably connected to the bodywork (11) of the vehicle (1), and the cable (17) is connected to an adjustable radius of a steering wheel (7), and that a spring (20) disposed on the bodywork (11) of the vehicle (1) acts upon the adjustable radius (21) of the steering wheel (7), substantially horizontally effective lateral movement components of the vehicle (1) being used upon the steering wheel (7) to execute corrective movements.

6. Device for effecting the method according to one of claims 1 to 3, having a vehicle (1) which is situated on a test bed, is fixed at one point in the direction of travel and whose wheels (2) revolve on the test bed, characterized in that, upon introduction of strong vertical movements (6) via the test bed to at least one pair of the revolving wheels (2) of the vehicle (1), the lateral movements of the vehicle (1) relative to a reference point (16) may be diverted by means of a hydraulic cylinder with piston rod (22), which cylinder in the state of rest is adjacent to a measuring point (15) of the bodywork (11) of the vehicle (1) at the height of the rolling axis (13), and that, upon introduction of the strong vertical movements (6), as a function of a displacement of the hydraulic medium through hydraulic tubes (23) in a further hydraulic cylinder with piston rod (24) the piston rod, which is connected in an articulated manner to an adjustable radius of a steering wheel (7), relays steering corrections to the steering wheel (7), only the substantially horizontally effective lateral movement components of the vehicle (1) being used upon the steering wheel (7) to execute corrective movements.

7. Device for effecting the method according to one of claims 1 to 3, having a vehicle (1) which is situated on a test bed, is fixed at one point in the direction of travel and whose wheels (2) revolve on the test bed, characterized in that, upon introduction of strong vertical movements (6) via the test bed to at least one pair of the revolving wheels (2) of the vehicle (1), the lateral movements of the vehicle (1) relative to a reference point (16) may be detected by a displacement measuring device (25) provided between a measuring point (15), provided on the bodywork (11) at the height of the rolling axis (13), and the reference point (16) and that as a function of the lateral movement of the measuring point (15), upon introduction of strong vertical movements, a control signal may be supplied by the displacement measuring device (25) to a controller (26), that from said control signal a signal for a steering correction is formed and relayed to a control element (27) and that the control element (27) on the one hand is supported detachably on the bodywork (11) of the vehicle (1) and on the other hand is connected in an articulated manner to an adjustable radius of a steering wheel (7) and that the steering wheel (7) is operable as a function of the steering correction, only the substantially horizontally effective lateral movement components of the vehicle (1) being used upon the steering wheel (7) to execute corrective movements.

8. Device according to one of claims 4 to 7, characterized in that the at least one sampling point (15) is displaced relative to a steering point (7).

## Revendications

1. Procédé de braquage de roues en roulement d'un véhicule (1) sur un banc d'essai pour déterminer les propriétés telles qu'en fonctionnement réel, caractérisé en ce que à partir des déplacements de rotation et latéraux se produisant en cas de sollicitations verticales de grande ampleur du véhicule par l'intermédiaire des roues de ce véhicule, au moins une paire de roues directrices (2) en cours de roulement est braquée, en fonction des débattements latéraux mesurables, se produisant suite aux déplacements latéraux du véhicule (1), d'une partie de véhicule faisant office de point de mesure (15), depuis sa position de repos par rapport à un point de référence (16) extérieur au véhicule (1) et non-soumis à l'influence des sollicitations verticales, le débattement latéral de la partie de véhicule étant mesuré dans un plan passant à la hauteur de l'axe de roulis (13).

2. Procédé selon la revendication 1, caractérisé en ce qu'un point de braquage (7) situé sur le véhicule est séparé, dans l'espace, du point de mesure (15) destiné à déterminer les débattements du véhicule.

3. Procédé selon la revendication 1, caractérisé en ce que, dans le cas où l'on a des moyens de transmission (17) à précontraindre, la précontrainte (20) agit pratiquement dans le plan de braquage.

4. Dispositif de mise en oeuvre du procédé selon l'une des revendications précédentes, avec un véhicule (1) se trouvant sur un banc d'essai et fixé dans la direction de roulage en un emplacement et dont les roues (2) roulent sur le banc d'essai, caractérisé en ce que, lors de l'introduction de déplacements verticaux (6) de grande ampleur par l'intermédiaire du banc d'essai sur au moins une paire des roues (2) en roulement du véhicule (1), les déplacements latéraux du véhicule (1) peuvent être dérivés par rapport à un point de référence (16), par l'intermédiaire d'une tige (10), reliée de façon articulée à une potence de déviation (8) elle-même reliée de façon amovible à la carrosserie (11) du véhicule (1), par une tige de liaison (12) articulée à la potence de déviation (8) et par une autre potence de déviation, disposée amovible sur la carrosserie (11) du véhicule (1) et en ce que, par l'intermédiaire d'une tige de direction (14), disposée articulée sur la potence de déviation, en fonction d'un rayon réglable sur un volant (7), ne sont transmises sur ce volant (7) que les composantes cinématiques latérales du véhicule (1) agissant pratiquement horizontalement, en vue de réaliser des mouvements de correction, grâce au fait que la tige (10) est disposée au niveau de l'axe de roulis (13).

5. Dispositif de mise en oeuvre du procédé selon les revendications 1 à 3 en particulier selon la revendication 3, avec un véhicule (1) se trouvant sur un banc d'essai et fixé dans la direction de roulage en un emplacement et dont les roues (2) roulent sur le banc d'essai, caractérisé en ce que, lors de l'introduction de déplacements verticaux (6) de grande ampleur par l'intermédiaire du banc d'essai sur au moins une paire des roues (2) en roulement du véhicule (1), les déplacements latéraux du véhicule (1) par rapport à un point de référence (16) peuvent être dérivés au moyen d'un câble (17) par l'intermédiaire d'une première poulie de renvoi inférieure (18) reliée de façon amovible à la carrosserie (11) du véhicule (1), placée au niveau de l'axe de roulis (13), et d'une poulie de renvoi supérieure (19) reliée de façon amovible à la carrosserie (11) du véhicule (1), le câble étant relié à un volant (7), à un rayon réglable de celui-ci, et en ce que, sur ce rayon réglable (21) du volant (7), agit un ressort (20) disposé sur la carrosserie (11) du véhicule (1), les composantes cinématiques latérales agissant pratiquement horizontalement sur le volant (7) servant à réaliser des mouvements de correction.

6. Dispositif de mise en oeuvre du procédé selon l'une des revendications 1 à 3, avec un véhicule (1) se trouvant sur un banc d'essai et fixé dans la direction de roulage en un emplacement, et dont les roues (2) roulent sur le banc d essai, caractérisé en ce que, lors de l'introduction de mouvements verticaux (6) de grande ampleur par l'intermédiaire du banc d'essai sur au moins une paire des roues (2) en roulement du véhicule (1), les mouvements latéraux du véhicule (1) par rapport à un point de référence (16) sont dérivables par l'intermédiaire d'un vérin hydraulique daté d'une tige de piston (22), appliqué à l'état de repos sur un point de mesure (15) de la carrosserie (11) du véhicule (1) au niveau de l'axe de roulis (13) et en ce que lors de l'introduction des mouvements verticaux (6) de grande ampleur, en fonction d'un refoulement du fluide hydraulique, par l'intermédiaire de tuyaux hydrauliques (23), dans un vérin hydraulique supplémentaire doté d'une tige de piston (24), la tige de piston reliée de façon articulée, à un rayon réglable, à un volant (7) retransmet des corrections de direction au volant (7), seules les composantes cinématiques latérales agissant pratiquement horizontalement, du véhicule (1) servant à mettre en oeuvre des mouvements de correction.

7. Dispositif de mise en oeuvre du procédé selon l'une des revendications 1 à 3, avec un véhicule (1) se trouvant sur un banc d'essai, fixé en direction de roulage en un emplacement, et dont les roues (2) roulent sur le banc d'essai, caractérisé en ce que, lors de l'introduction de mouvements verticaux (6) de grande ampleur, par l'intermédiaire du banc d'essai sur au moins une paire des roues (2) en roulement du véhicule (1), les déplacements latéraux du véhicule (1) par rapport à un point de référence (16) peuvent être appréhendés par l'intermédiaire d'un dispositif de mesure de déplacement (25) prévu entre un point de mesure (15) existant sur la carrosserie (11), au niveau de l'axe de roulis (13) et le point de référence (16) et en ce qu'en fonction du déplacement latéral du point de mesure (15), lors de l'introduction de mouvements verticaux de grande ampleur, un signal de commande venant du dispositif de mesure de déplacement (25) peut être amené à une commande (26), en ce que, de là, un signal destiné à une correction de direction est élaboré et retransmis à un élément de réglage (27), et en ce que l'élément de réglage (27) est, d'une part, soutenu amovible sur la carrosserie (11) du véhicule et, d'autre part, relié de façon articulée, à un rayon réglable, à un volant (7), et en ce que le volant (7) peut être actionné en fonction de la correction de direction, seules les composantes cinématiques latérales qui agissent pratiquement horizontalement du véhicule (1) servant à mettre en oeuvre des mouvements de correction sur le volant (7).

8. Dispositif selon l'une des revendications 4 à 7, caractérisé en ce que le au moins un point de mesure (15) est déplacé par rapport à un point de braquage (7).
